(19) **Europäisches Patentamt / European Patent Office / Office européen des brevets**

(11) **EP 3 445 990 B1**

(12) # EUROPEAN PATENT SPECIFICATION

(45) Date of publication and mention
of the grant of the patent:
**29.04.2020 Bulletin 2020/18**

(51) Int Cl.:
*F16D 65/12* (2006.01)          *F16D 65/092* (2006.01)
*F16D 65/18* (2006.01)

(21) Application number: **17717737.5**

(86) International application number:
**PCT/EP2017/059165**

(22) Date of filing: **18.04.2017**

(87) International publication number:
**WO 2017/182459 (26.10.2017 Gazette 2017/43)**

(54) **STRUCTURED BRAKE DISC**

STRUKTURIERTE BREMSSCHEIBE

DISQUE DE FREIN STRUCTURÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2016 PCT/EP2016/058552**
**18.04.2016 PCT/EP2016/058554**

(43) Date of publication of application:
**27.02.2019 Bulletin 2019/09**

(73) Proprietor: **Volvo Truck Corporation**
**405 08 Göteborg (SE)**

(72) Inventors:
• **JOHANSSON, Staffan**
**411 33 Göteborg (SE)**
• **ANDERSSON, Tobias**
**423 38 Torslanda (SE)**

(74) Representative: **Kransell & Wennborg KB**
**P.O. Box 2096**
**403 12 Göteborg (SE)**

(56) References cited:
**EP-A1- 0 039 641      DE-A1- 2 611 078
JP-U- S6 099 337      JP-U- H01 124 433
US-A- 3 295 636**

## Description

TECHNICAL FIELD

The invention relates to a brake disc for arrangement in a vehicle to allow reduction of a speed of the vehicle by pressing first and second brake pads against the brake disc resulting in frictional interaction between first and second brake pad surfaces and corresponding first and second annular braking surfaces. The invention further relates to a brake pad for use with the brake disc according to the invention, a braking system and a vehicle.

The invention can be applied in heavy-duty vehicles, such as trucks, buses and construction equipment. Although the invention will be described with respect to a truck, the invention is not restricted to this particular vehicle, but may also be used in other vehicles such as buses and construction equipment.

BACKGROUND

Disc brakes are commonly used in various vehicles to provide for efficient and reliable braking.

In an effort to improve the braking performance of a disc brake system, US 3 750 788 discloses a brake disc with a serrated cross-sectional shape forming teeth having a relatively low height, to increase friction for a given braking force used for pressing brake pads against the brake disc.

There appears to be room for improvement of the brake disc and braking system according to US 3 750 788, in particular concerning the management of the heat generated during braking.

JP S60 99337 U discloses a structured brake disc according to the preamble of claim 1.

SUMMARY

An object of the invention is to provide for improved braking, in particular concerning management of the heat generated during braking.

According to a first aspect of the invention, this object is achieved by the brake disc according to claim 1.

In the brake disc according to embodiments of the present invention, the protrusion distance of a surface profile cross-section of at least one of the annular braking surfaces increases with increasing radial distance from a minimum protrusion radial position, everywhere in a central portion of the braking surface. Accordingly, there is no annular segment in the central portion with a constant protrusion distance.

The present invention is based on the realization that a disc brake system can be improved by providing for improved distribution of the heat generated during braking, as well as more efficient heat dissipation from the brake disc between braking events, and that this can be achieved by providing for diverging heat flux during braking, and increasing the heat dissipating area where the temperature during braking is particularly high, i.e. at the braking surfaces of the brake disc. The present inventor has further surprisingly found that providing for diverging heat flux during braking appears to be a dominant factor and that a generally concave surface profile in the central portion(s) of the annular braking surface(s) results in a significantly reduced thermal stress from thermal cycling. This is, in turn, expected to result in a truly significant increase in the life of the brake disc.

Embodiments of the present invention thus provide for improved heat spreading during braking, as well as improved heat dissipation between braking events where the temperature is the highest. In addition, the increased contact area between brake disc and brake pad in the central portion, as compared to a brake disc that is flat in the central portion, provides for a lower maximum temperature for a given braking power.

Comparative simulations have been performed on a reference brake disc with planar braking surfaces, a brake disc geometry with a thinner planar central portion, and a brake disc according to an embodiment of the present invention, with a generally concave central portion and a difference between minimum and maximum protrusion distance of 3 mm. The results of the simulations, which will be described in greater detail further below, surprisingly indicate that the life of the brake disc according to an embodiment of the present invention would be about 25% longer than the reference brake disc, while the life for the brake disc geometry with a thinner planar central portion would only be 70% of the life of the reference brake disc.

The protrusion distance - the axial distance from the base plane to the braking surface - may advantageously vary continuously with radial distance from the rotational axis, which reduces the risk of excessive wear on the brake disc and/or brake pads, and reduces the requirement on the mounting tolerance of the brake pads in relation to the surface structure of the brake disc.

According to embodiments, the protrusion distance may vary between a minimum protrusion distance and a maximum protrusion distance, a difference between the minimum protrusion distance and the maximum protrusion distance being less than 20 percent of a minimum distance between the first and second annular braking surfaces.

According to embodiments, the difference between the minimum protrusion distance and the maximum protrusion distance may be less than 5 mm. The larger the difference between the minimum protrusion distance and the maximum protrusion distance can be made, the more the size of the interfacing surfaces between brake pad and brake disc is increased. This would in turn be expected to provide for improved heat management. Somewhat counter-intuitively, however, simulations show that an increase in this distance beyond about 5 mm actually results in increased thermal stress, at least for a given maximum thickness of the brake disc.

According to various embodiments, the protrusion distance as a function of radial distance from the rotational axis may exhibit a plurality of local extrema. For instance, the surface profile cross-section may exhibit a generally sinusoidal variation with radial distance from the rotational axis of the brake disc. Hereby, the surface area of the braking surfaces of the brake disc can be increased even further, providing for even more efficient heat dissipation from the brake disc.

According to various embodiments, a central portion distance along the surface profile cross-section may be longer than each of a proximal portion distance along the surface profile cross-section and a distal portion distance along the surface profile cross-section. For instance, the above-mentioned central portion distance may be at least five percent longer than the proximal and distal portion distances. The difference between the central portion distance and the proximal and distal portion distances can be achieved in various ways. For example, the average amplitude of protrusion distance variations may be greater in the central portion than in the proximal and distal portions and/or the wavelength of protrusion distance variations may be shorter in the central portion than in the proximal and distal portions.

Studies have shown that the temperature resulting from braking is not the same across the contact area between the brake disc and the brake pad, but that the temperature may be higher in the central portion than in the proximal portion and the distal portion, in particular during severe operating conditions. The expansion-contraction cycling resulting from this temperature gradient has been found to increase the risk of brake disc cracks and also lead to an increased risk of noise and vibrations from the braking system.

By increasing the surface area more in the central portion than in the proximal and distal regions in accordance with these embodiments of the present invention, the stress on the brake disc can be reduced, whereby the risk of formation of brake disc cracks can consequently be reduced. This in turn provides for an increased utilization of a vehicle equipped with a braking system including the brake disc.

According to a second aspect of the invention, the above-mentioned object is achieved by the brake pad according to claim 6.

According to embodiments, the brake pad may comprise a friction member and a structured coating on the friction member. The structured coating may be applied to the friction member to achieve a surface profile cross-section of the brake pad surface that may be a scaled inverse of the surface profile cross-section of the brake disc surface of the brake disc according to embodiments of the present invention. In particular, the surface profile cross-section of the brake pad surface may be scaled to exhibit smaller amplitudes than the surface profile cross-section of the brake disc. After an initial wear-in period, the surface profile cross-sections of the brake pad and the brake disc may fit perfectly with each other.

According to one example, the structured coating may be provided in the form of a so-called "green coat". It should, however, be noted that any other suitable material or substance may be used. It should also be noted that the surface profile of the friction member may be different from the surface profile provided by the structured coating.

According to embodiments of the present invention, there is provided a braking system for a vehicle, comprising a brake disc according to embodiments of the first aspect of the present invention; first and second brake pads according to embodiments of the second aspect of the present invention; and an actuator for reducing the distance between the first and second brake pads to press the brake disc between the first and second brake pads.

Each of the first and second brake pads may be made of a brake pad material being less wear resistant than a brake disc material of the brake disc. Further, each of the first and second braking surfaces may lack a coating being harder than the brake disc material.

Moreover, the braking system according to embodiments of the present invention may advantageously be comprised in a vehicle for allowing controlled reduction of the speed of the vehicle.

In summary, the present invention thus relates to a brake disc for arrangement in a vehicle to rotate around a rotational axis. First and second annular braking surfaces extend radially between an inner braking surface radius and an outer braking surface radius. Each of the first and second braking surfaces has an annular proximal portion, an annular distal portion, and an annular central portion. At least one of the first and second braking surfaces is structured to protrude from a base plane perpendicular to the rotational axis to exhibit a surface profile cross-section with a plane including the rotational axis. A protrusion distance from the base plane to the surface profile cross-section as a function of radial distance from the rotational axis exhibits a minimum protrusion distance at a minimum protrusion radial position in the central portion, and the protrusion distance increases with increasing radial distance from the minimum protrusion radial position everywhere in the central portion.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1a is a partly cut-out perspective view of a braking system according to a first embodiment of the present invention;

Fig. 1b is a cross-section view of the braking system in fig 1a;

Fig. 1c is a partly cut-out perspective view of the braking system according to a second embodiment of the present invention;

Figs 2a-b schematically illustrate an example temperature distribution during braking and a possible resulting failure mode for a conventional brake disc;

Fig 3a is a partial cross-section view of a reference brake disc with planar braking surfaces;

Fig 3b is a partial cross-section view of a brake disc having a brake disc geometry with a thinner planar central portion;

Fig 3c is a partial cross-section view of a brake disc according to an embodiment of the present invention;

Fig 4a is a diagram schematically showing the distances along the proximal, central and distal portions of the braking surface cross-section for the brake disc configuration in fig 3a;

Fig 4b is a diagram schematically showing the distances along the proximal, central and distal portions of the braking surface cross-section for the brake disc configuration in fig 3b;

Fig 4c is a diagram schematically showing the distances along the proximal, central and distal portions of the braking surface cross-section for the brake disc configuration in fig 3c;

Fig 5a illustrates a simulated fatigue damage resulting from five thermal cycles corresponding to a partial disc crack test, for the brake disc configuration in fig 3a;

Fig 5b illustrates a simulated fatigue damage resulting from five thermal cycles corresponding to a partial disc crack test, for the brake disc configuration in fig 3b; and

Fig 5c illustrates a simulated fatigue damage resulting from five thermal cycles corresponding to a partial disc crack test, for the brake disc configuration in fig 3c.

## DETAILED DESCRIPTION OF EXAMPLE EMBODIMENTS OF THE INVENTION

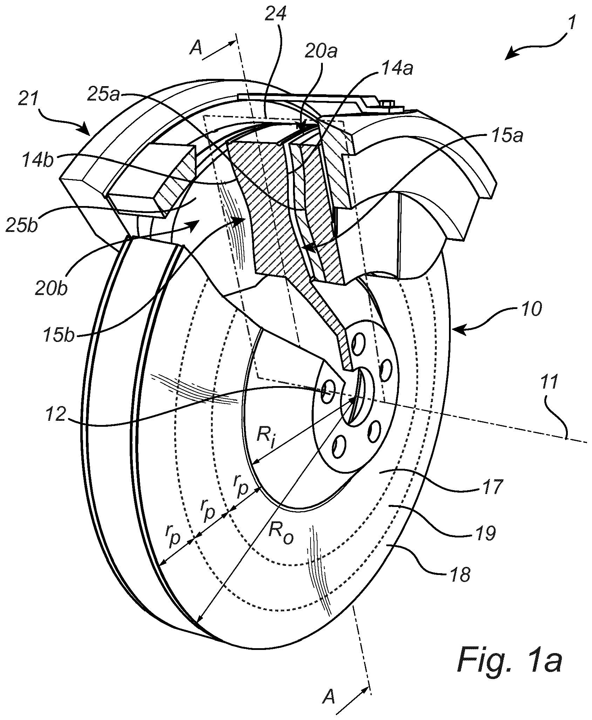

Fig 1a is a partly cut-out perspective view of a braking system 1 according to a first embodiment of the present invention, comprising a brake disc 10, first 20a and second 20b brake pads, and a braking actuator arrangement 21. In the braking system 1 according to the present first embodiment, the brake disc 10 is attachable to a rotatable member of a vehicle by means of mounting holes 12 (only one of the mounting holes is indicated by a reference numeral for ease of drawing) so that the brake disc 10 rotates around a rotational axis 11 of the brake disc 10 when the vehicle is moving.

To reduce the speed of the vehicle, the braking actuator arrangement 21 can be controlled to move the first 20a and second 20b brake pads towards each other to press the brake disc 10 between the first 20a and second 20b brake pads. This results in frictional interaction between the first 25a and second 25b brake pad surfaces and corresponding first 15a and second 15b annular braking surfaces on opposite sides of the brake disc 10.

As is shown in fig 1a, each of the first 15a and second 15b annular braking surfaces extends radially between an inner braking surface radius $R_i$ and an outer braking surface radius $R_o$ in relation to the rotational axis 11. As is also schematically indicated for the first braking surface 15a in fig 1a, each of the braking surfaces 15a-b has an annular proximal portion 17, an annular distal portion 18, and an annular central portion 19 between the proximal portion 17 and the distal portion 18. The proximal portion 17, the distal portion 18, and the central portion 19 have the same widths $r_p$ as indicated in fig 1a.

In the braking system of fig 1a, the surface profile cross-sections 14a-b, with a plane 24 including the rotational axis 11, of the braking surfaces 15a-b are generally concave, at least in the annular central portion 19, and the corresponding braking surfaces 25a-b of the brake pads 20a-b conform to the shapes of the braking surfaces 15a-b. As will be described in greater detail further below, this provides for a diverging heat flux from the braking surfaces 15a-b, at least in the central portion 19. The shape of the brake disc in fig 1a, also provides for an increased heat dissipating area of the brake disc 10 where the temperature is the highest during braking, and further helps to reduce the maximum temperature due to the increased contact area between the braking surfaces 15a-b of the brake disc 10 and the corresponding braking surface 25a-b of the respective brake pads 20a-b.

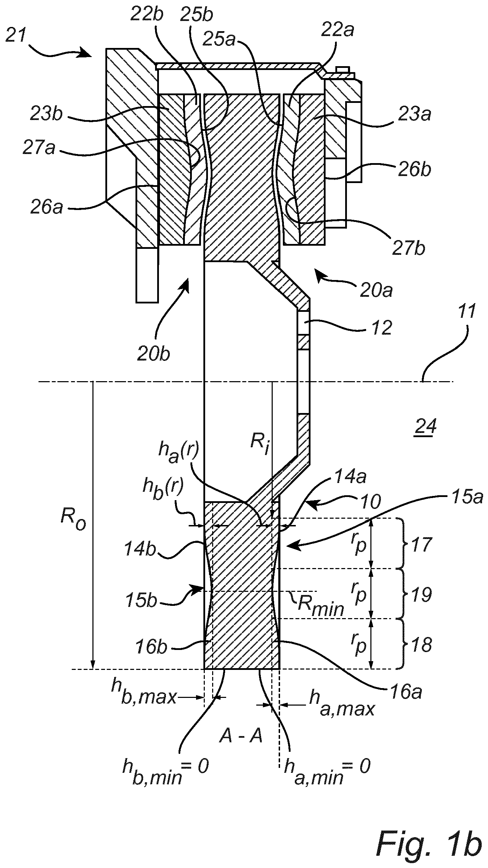

The configuration of the braking surfaces 15a-b of the brake disc 10 will now be described in greater detail with reference to the cross-section view in fig 1b. The cross-section view is in the plane 24 (see fig 1a) including the rotational axis 11. Referring to fig 1b, each of the first 15a and the second 15b braking surfaces of the brake disc 10 is structured to protrude from a respective base plane 16a-b (perpendicular to the rotational axis 11) to exhibit a surface profile cross-section 14a-b with the plane 24 (see fig 1a) including the rotational axis 11. As can be seen in fig 1b, each of the surface profile cross-sections 14a-b of the first 15a and second 15b braking surfaces exhibits a respective protrusion distance $h_a(r)$ and $h_b(r)$ along a normal to the respective base planes 16a-b. Each of the protrusion distances $h_a(r)$, $h_b(r)$ varies with radial distance r from the rotational axis 11 in such a way that the central portion average protrusion distance in the central portion 19 is less than the proximal average protrusion distance in the proximal portion 17 and the distal average protrusion distance in the distal portion 18. Further, the protrusion distance $h_a(r)$, $h_b(r)$ as a function of radial distance r from the rotational axis 11 exhibits a minimum protrusion distance $h_{a,min}$, $h_{b,min}$ at a minimum protrusion radial position $R_{min}$ in the central portion 19, and the protrusion distance $h_a(r)$, $h_b(r)$ increases with increasing radial distance from the minimum protrusion radial position $R_{min}$ everywhere in the central portion 19. In other words, at least the central portion is curved everywhere, so that there is no portion with a constant protrusion distance $h_a(r)$, $h_b(r)$. This means that the heat flux generated during braking diverges everywhere in the central portion 19.

As is also indicated in fig 1b, each of the brake pads 20a-b comprises a friction member 22a-b and a backplate 23a-b for attachment of the brake pads 20a-b to the braking actuator arrangement 21. Each of the backplates 23a-b has a generally planar mounting side 26a-b for attachment to the braking actuator arrangement 21, and a friction member side 27a-b to which the friction member 22a-b is fixed. To provide for an increased service life of the brake pads 20a-b, the friction member side 27a-b of the backplate 22a-b is curved to substantially follow the braking surface profile 25a-b of the brake pad 20a-b.

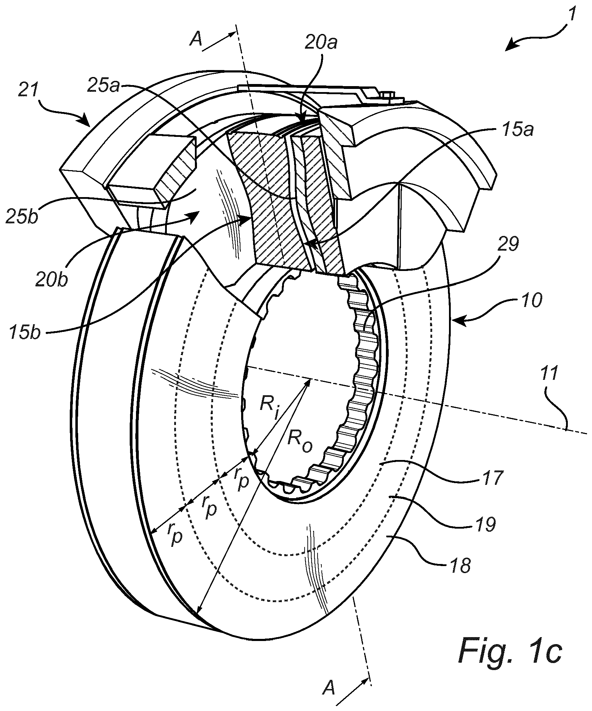

To illustrate that embodiments of the present invention are equally useful regardless of the overall configuration of the brake disc, fig 1c schematically shows a second embodiment of the braking system 1 according to the present invention, which differs from the braking system in figs 1a-b in that the brake disc 10 is attachable to a rotating member of a vehicle by splines 29 rather than by the mounting holes 12 shown in figs 1a-b.

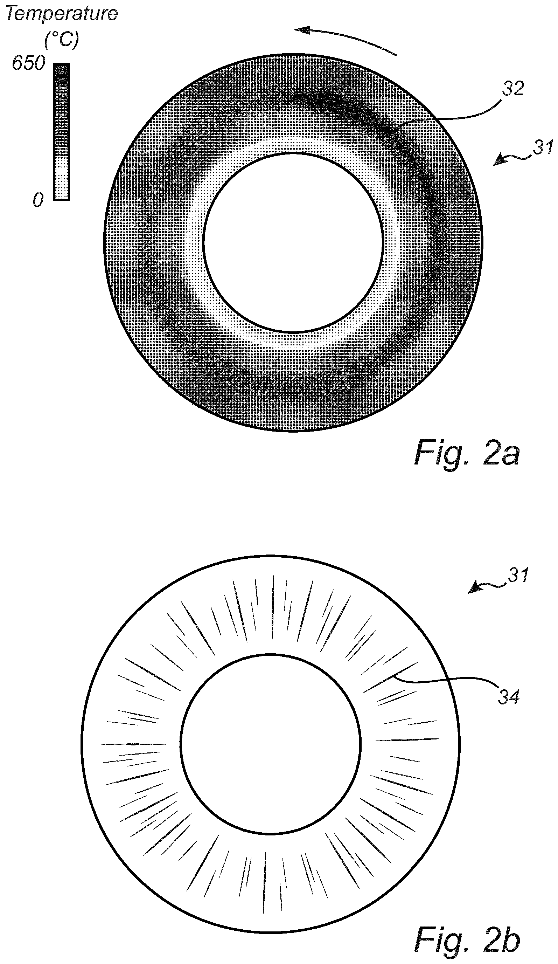

To further illustrate advantages of the braking system according to the present invention, the concept of "thermal localization" and an important related failure mode will be briefly explained below with reference to figs 2a-b.

Fig 2a shows the result of a simulation of the temperature on a brake disc surface of a prior art brake disc 31 with planar braking surfaces resulting from the application of the brake ("Simulation of Thermal Stresses in a Brake Disc" by Asim Rashid, Licentiate Thesis No. 1603, LIU-TEK-LIC-2013:37). As is schematically shown in fig 2a, application of the brake results in a hot band 32 in the central portion of the braking surface where the temperature is as high as in excess of 600°C. In the proximal and distal portions, the temperature is well below 400 °C.

The repeated engagement and disengagement of the braking system may eventually result in the formation of radial cracks 34 in the brake disc 31 as is schematically shown in fig 2b. By reducing the maximum temperature in the hot band 32 through embodiments of the present invention, the formation or radial cracks may be prevented, or at least considerably delayed, resulting in an improved utilization of the vehicle comprising the braking system.

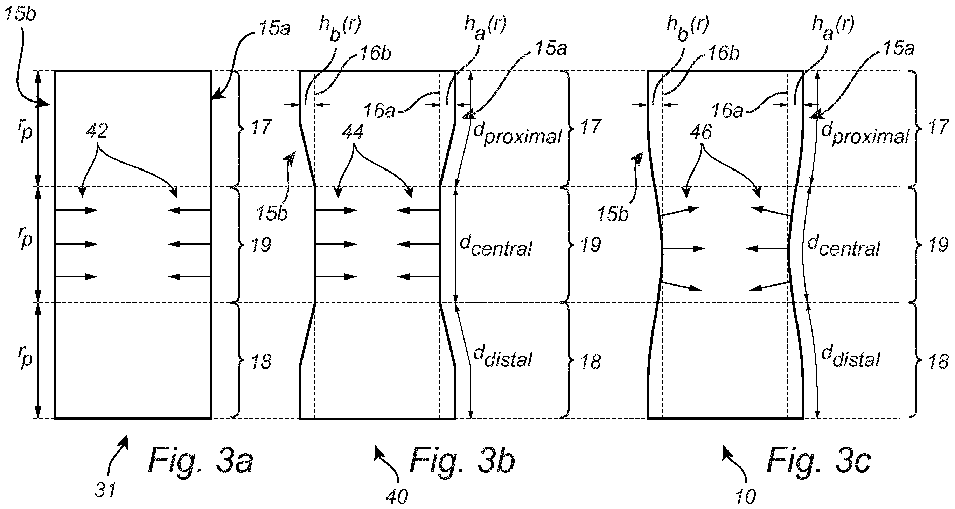

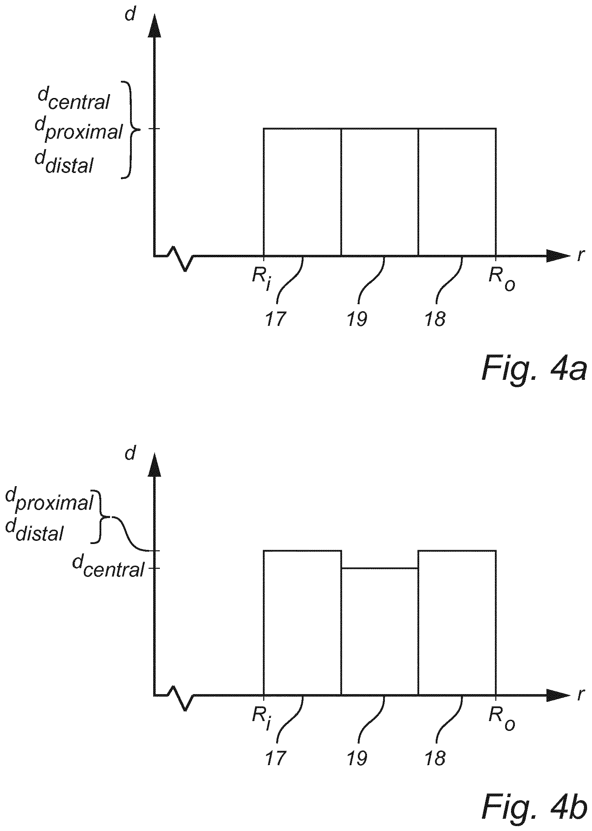

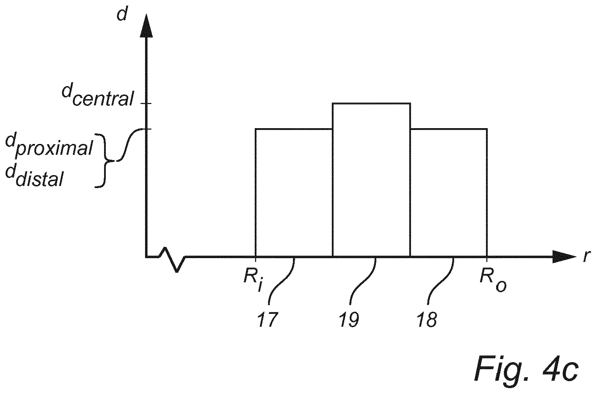

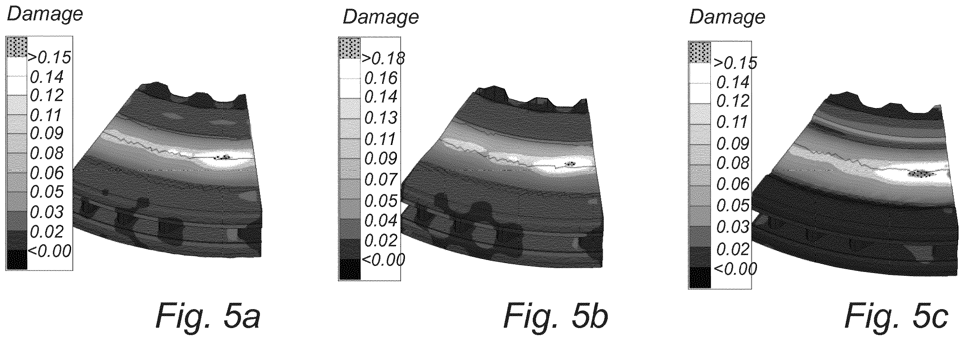

In the following, mechanisms believed to contribute to the increased life of the brake disc according to embodiments of the present invention will be described with reference to figs 3a-c, and figs 4a-c, and a performed simulation will be described with reference to figs 5a-c.

Fig 3a is a partial cross-section view of a reference brake disc 31 with planar braking surfaces 15a-b. For the reference brake disc 31 in fig 3a, the protrusion distances $h_a(r)$, $h_b(r)$ are obviously the same within each of the proximal 17, distal 18, and central 19 portions. Furthermore, the central portion distance $d_{central}$ along the surface profile cross-section in the central portion 19, the proximal portion distance $d_{proximal}$ along the surface profile cross-section in the proximal portion 17, and the distal portion distance $d_{distal}$ along the surface profile cross-section in the distal portion 18 are all the same. This is also schematically illustrated in the diagram of fig 4a. As was previously mentioned, it is known that braking may result in a so-called hotband in the central portion 19. For the reference brake disc 31 in fig 3a, the heat generated during braking is mainly conducted in the heat flux direction illustrated by the arrows 42 in fig 3a.

Fig 3b is a partial cross-section view of a brake disc 40 having a brake disc geometry with a thinner planar central portion. The brake disc 40 in fig 3b is similar to that shown in fig 1 of the Japanese utility model JP H01-124433. For the brake disc 40 in fig 3b, the protrusion distances $h_a(r)$, $h_b(r)$ are less in the central portion 19 than in the proximal 17 and distal 18 portions. Moreover, the minimum protrusion distances $h_{a,min}$, $h_{b,min}$ are in the central portion 19. However, in the brake disc 40 in fig 3b, the protrusion distance $h_a(r)$, $h_b(r)$ does not increase with increasing radial distance from the minimum protrusion radial position $R_{min}$ everywhere in the central portion 19. Instead, the protrusion distance is constant throughout the central portion 19. Furthermore, the central portion distance $d_{central}$ along the surface profile cross-section in the central portion 19 is shorter than each of the proximal portion distance $d_{proximal}$ along the surface profile cross-section in the proximal portion 17, and the distal portion distance $d_{distal}$ along the surface profile cross-section in the distal portion 18. This is also schematically illustrated in the diagram of fig 4b. For the brake disc 40 in fig 3b, the heat generated during braking is mainly conducted in the heat flux direction illustrated by the arrows 44 in fig 3b.

Fig 3c is a partial cross-section view of a brake disc 10 according to an embodiment of the present invention, having a brake disc geometry with a generally concave shape, at least in the central portion 19. For the inventive brake disc 10 in fig 3c, the protrusion distances $h_a(r)$, $h_b(r)$ are less in the central portion 19 than in the proximal 17 and distal 18 portions. Moreover, the minimum protrusion distances $h_{a,min}$, $h_{b,min}$ are in the central portion 19, and in the brake disc 10 in fig 3c, the protrusion distance $h_a(r)$, $h_b(r)$ increases with increasing radial distance from the minimum protrusion radial position $R_{min}$ everywhere in the central portion 19. Furthermore, the central portion distance $d_{central}$ along the surface profile cross-section in the central portion 19 is longer than each of the proximal portion distance $d_{proximal}$ along the surface profile cross-section in the proximal portion 17, and the distal portion distance $d_{distal}$ along the surface profile cross-section in the distal portion 18. This is also schematically illustrated in the diagram of fig 4b. For the brake disc 10 in fig 3c, the heat generated during braking is mainly conducted in the diverging heat flux directions illustrated by the arrows 46 in fig 3c.

As is clear from the above, the brake disc 10 according to the present illustrative embodiment of the invention provides for a diverging flux of at least the heat generated in the central portion during braking. Furthermore, the surface area of the central portion 19 is enlarged in relation to the surface areas in the proximal portion 17 and the distal portion 18, providing for improved heat dissipation to the surrounding air when the brake pads are released (between braking events).

The simulated thermal cycling performance of the brake disc 10 in fig 3c is remarkable as compared to that of the reference brake disc 31 in fig 3a and the brake disc 40 in fig 3b having a brake disc geometry with a thinner planar central portion.

The simulations have been carried out to mimic a part of a disc crack test with cyclic braking:
The load is energy equivalent to braking at 2.8 kNm torque for 45 seconds followed by cooling for 400 seconds.

The above load have been applied 5 times, alternating between a single hotband and dual concentric hotbands.

The heat flux applied has been calculated using the following formula:

$$P = T\omega = 2800 Nm \cdot 44.5 \, rad/s = 125 kW$$

$$Q = P/A$$

The area A varies slightly between a single hotband and dual concentric hotband, and is dependent on the geometry of the brake disc.

The result of this simulation is illustrated by figs 5a-c, showing the simulated fatigue damage simulated stress distributions for the respective brake discs in figs 3a-c. Fig 5a shows the simulated fatigue damage for the reference brake disc 31 in fig 3a, fig 5b shows the simulated fatigue damage for the brake disc 40 in fig 3b having a brake disc geometry with a thinner planar central portion, and fig 5c shows the simulated fatigue damage for the inventive brake disc 10 in fig 3c.

The brake disc configuration 10 in fig 3c exhibits the smallest amount of fatigue damage - around 20% less than the reference disc 31 in fig 3a, and about 45% less than the brake disc configuration 40 in fig 3b.

The number of temperature cyclings that can be carried out before the brake disc is so damaged that it should be replaced is inversely proportional to the maximum fatigue damage value indicated in figs 5a-c. This is a measure of the life of the brake disc, and indicates that the life of the brake disc 10 according to an embodiment of the present invention would be about 25% longer than the life of the reference brake disc 31, while the life for the brake disc geometry in fig 3c with a thinner planar central portion would only be 70% of the life of the reference brake disc 31.

It is to be understood that the present invention is not limited to the embodiments described above and illustrated in the drawings; rather, the skilled person will recognize that many, combinations, changes and modifications may be made within the scope of the appended claims.

## Claims

1. A brake disc (10) for arrangement in a vehicle to rotate around a rotational axis (11) of said brake disc (10) when said vehicle is moving, and to allow reduction of a speed of said vehicle by pressing first (20a) and second (20b) brake pads against said brake disc (10) resulting in frictional interaction between first (25a) and second (25b) brake pad surfaces and corresponding first (15a) and second (15b) annular braking surfaces on opposite sides of said brake disc (10), each of said first (15a) and second (15b) annular braking surfaces extending radially between an inner braking surface radius ($R_i$) and an outer braking surface radius ($R_o$) of said brake disc (10) in relation to said rotational axis (11), wherein each of said first (15a) and second (15b) braking surfaces has an annular proximal portion (17), an annular distal portion (18) further away from said rotational axis (11) than said proximal portion (17), and an annular central portion (19) between said proximal portion (17) and said distal portion (18), said proximal portion (17), distal portion (18), and central portion (19) having equal widths ($r_p$), wherein at least one of said first (15a) and second (15b) braking surfaces is structured to protrude from a base plane (16a, 16b) perpendicular to said rotational axis (11) to exhibit a surface profile cross-section (14a, 14b) with a plane (24) including said rotational axis (11), wherein a protrusion distance ($h_a(r)$, $h_b(r)$) along a normal to said base plane (16a, 16b) from said base plane (16a, 16b) to said surface profile cross-section (14a, 14b) varies with radial distance (r) from said rotational axis (11) in such a way that a central portion average protrusion distance in said central portion (19) is less than a proximal average protrusion distance in said proximal portion (17) and a distal average protrusion distance in said distal portion (18), and wherein said protrusion distance ($h_a(r)$, $h_b(r)$) as a function of radial distance (r) from said rotational axis (11) exhibits a minimum protrusion distance ($h_{a,min}$, $h_{b,min}$) at a minimum protrusion radial position ($R_{min}$) in said central portion (19), wherein said protrusion distance ($h_a(r)$, $h_b(r)$) increases with increasing radial distance from said minimum protrusion radial position ($R_{min}$) everywhere in said central portion (19), **characterized in that** said protrusion distance ($h_a(r)$, $h_b(r)$) varies between said minimum protrusion distance ($h_{a,min}$, $h_{b,min}$) and a maximum protrusion distance ($h_{a,max}$, $h_{b,max}$), a difference between said minimum protrusion distance ($h_{a,min}$, $h_{b,min}$) and said maximum protrusion distance ($h_{a,max}$, $h_{b,max}$) being less than 20 percent of a minimum distance between said first (15a) and second (15b) annular braking surfaces.

2. The brake disc (10) according to claim 1, **characterized in that** said protrusion distance ($h_a(r)$, $h_b(r)$) varies continuously with radial distance (r) from said rotational axis (11).

3. The brake disc (10) according to any one of the preceding claims, **characterized in that** said protrusion distance ($h_a(r)$, $h_b(r)$) varies between a minimum protrusion distance ($h_{a,min}$, $h_{b,min}$) and a maximum protrusion distance ($h_{a,max}$, $h_{b,max}$), a difference between said minimum protrusion distance ($h_{a,min}$, $h_{b,min}$) and said maximum protrusion distance ($h_{a,max}$, $h_{b,max}$) being less than 5 mm.

4. The brake disc (10) according to any one of the preceding claims, **characterized in that** a central portion distance ($d_{central}$) along said surface profile cross-section (14a, 14b) in said central portion (19) is longer than each of a proximal portion distance ($d_{proximal}$) along said surface profile cross-section (14a, 14b) in said proximal portion (17) and a distal portion distance ($d_{distal}$) along said surface profile cross-section (14a, 14b) in said distal portion (18).

5. The brake disc (10) according to any one of the preceding claims, **characterized in that** said protrusion distance ($h_a(r)$, $h_b(r)$) as a function of radial distance (r) from said rotational axis (11) exhibits a plurality of local extrema.

6. A brake pad (20a, 20b) for use together with the brake disc (10) according to any one of the preceding claims, **characterized in that** said brake pad (20a, 20b) is structured to conform to the at least one structured braking surface (15a, 15b) of the brake disc (10) according to any one of the preceding claims.

7. The brake pad (20a, 20b) according to claim 6, **characterized in that** said brake pad (20a, 20b) comprises a friction member (22a, 22b) and a structured coating (36a, 36b) on said friction member (22a, 22b).

8. The brake pad (20a, 20b) according to claim 6 or 7, **characterized in that** said brake pad (20a, 20b) comprises a friction member (22a, 22b) and a backplate (23a, 23b) having a generally planar mounting side (26a, 26b) for attachment of said brake pad (20a, 20b) to a braking actuator arrangement (21), and a friction member side (27a, 27b) to which said friction member (22a, 22b) is fixed, wherein the friction member side (27a, 27b) of said backplate (22a, 22b) is structured to substantially follow a braking surface profile (25a, 25b) of said brake pad (20a, 20b).

9. A braking system (1) for a vehicle, **characterized by** the brake disc (10) according to any one of claims 1 to 5 and the brake pad (20a, 20b) according to any one of claims 6 to 8.

10. A vehicle, **characterized by** the braking system (1) according to claim 9.

**Patentansprüche**

1. Bremsscheibe (10) zur Anordnung in einem Fahrzeug zum Drehen um eine Drehachse (11) der Bremsscheibe (10), wenn sich das Fahrzeug bewegt, und um die Verminderung einer Geschwindigkeit des Fahrzeugs zu ermöglichen, indem ein erster (20a) und ein zweiter (20b) Bremsklotz gegen die Bremsscheibe (10) gepresst werden, was zu einer Reibungsinteraktion zwischen einer ersten (25a) und einer zweiten (25b) Bremsklotzoberflache und einer entsprechenden ersten (15a) beziehungsweise zweiten (15b) ringförmigen Bremsoberfläche auf gegenüberliegenden Seiten der Bremsscheibe (10) führt, wobei sich die erste (15a) und die zweite (15b) ringförmige Bremsoberfläche jeweils radial zwischen einem inneren Bremsoberflächenradius ($R_i$) und einem äußeren Bremsoberflächenradius ($R_0$) der Bremsscheibe (10) im Verhältnis zu der Drehachse (11) erstrecken, wobei die erste (15a) und die zweite (15b) Bremsoberfläche jeweils einen ringförmigen nahen Abschnitt (17), einen ringförmigen fernen Abschnitt (18), der weiter von der Drehachse (11) entfernt ist als der nahe Abschnitt (17), und einen ringförmigen mittleren Abschnitt (19) zwischen dem nahen Abschnitt (17) und dem fernen Abschnitt (18) aufweisen, wobei der nahe Abschnitt (17), der ferne Abschnitt (18) und der mittlere Abschnitt (19) gleiche Breiten ($r_p$) aufweisen, wobei die erste (15a) und/oder die zweite (15b) Bremsoberfläche derart strukturiert sind, dass sie von einer Grundebene (16a, 16b) senkrecht zur Drehachse (11) vorspringen, um einen Oberflächenprofil-Querschnitt (14a, 14b) mit einer Ebene (24), welche die Drehachse (11) beinhaltet, aufzuweisen, wobei eine Vorsprungsdistanz ($h_a(r)$, $h_b(r)$) entlang einer Normalen zu der Grundebene (16a, 16b) von der Grundebene (16a, 16b) von dem Oberflächenprofil-Querschnitt (14a, 14b) mit der radialen Distanz (r) von der Drehachse (11) derart variiert, dass eine durchschnittliche Vorsprungsdistanz des mittleren Abschnitts in dem mittleren Abschnitt (19) kleiner als eine nahe durchschnittliche Vorsprungsdistanz in dem nahen Abschnitt (17) und eine ferne durchschnittliche Vorsprungsdistanz in dem fernen Abschnitt (18) ist und wobei die Vorsprungsdistanz ($h_a(r)$, $h_b(r)$) als eine Funktion der radialen Distanz (r) von der Drehachse (11) an einer minimalen Vorsprungsradialposition (Rmin) in dem mittleren Abschnitt (19) eine minimale Vorsprungsdistanz ($h_{a,min}$, $h_{b,min}$) aufweist, wobei die Vorsprungsdistanz ($h_a(r)$, $h_b(r)$) mit zunehmender radialer Distanz von der minimalen Vorsprungsradialposition (Rmin) überall in dem mittleren Abschnitt (19) zunimmt, **dadurch gekennzeichnet, dass** die Vorsprungsdistanz ($h_a(r)$, $h_b(r)$) zwischen der minimalen Vorsprungsdistanz ($h_{a,min}$, $h_{b,min}$) und einer maximalen Vorsprungsdistanz ($h_{a,max}$, $h_{b,max}$) variiert, wobei eine Differenz zwischen der minimalen Vorsprungsdistanz ($h_{a,min}$, $h_{b,min}$) und der maximalen Vorsprungsdistanz ($h_{a,max}$, $h_{b,max}$) kleiner als 20 Prozent einer minimalen Distanz zwischen der ersten (15a) und der zweiten (15b) ringförmigen Bremsoberfläche ist.

2. Bremsscheibe (10) nach Anspruch 1, **dadurch gekennzeichnet, dass** die Vorsprungsdistanz ($h_a(r)$, $h_b(r)$) mit radialer Distanz (r) von der Drehachse (11) kontinuierlich variiert.

3. Bremsscheibe (10) nach einem der vorhergehenden Ansprüche, **dadurch gekennzeichnet, dass** die Vorsprungsdistanz ($h_a(r)$, $h_b(r)$) zwischen einer minimalen Vorsprungsdistanz ($h_{a,min}$, $h_{b,min}$) und einer maximalen Vorsprungsdistanz ($h_{a,max}$, $h_{b,max}$) variiert, wobei eine Differenz zwischen der minimalen Vorsprungsdistanz ($h_{a,min}$, $h_{b,min}$) und der maximalen Vorsprungsdistanz ($h_{a,max}$, $h_{b,max}$) kleiner als 5 mm ist.

4. Bremsscheibe (10) nach einem der vorhergehenden Ansprüche, **dadurch gekennzeichnet, dass** eine Distanz des mittleren Abschnitts ($d_{central}$) entlang des Oberflächenprofil-Querschnitts (14a, 14b) in dem mittleren Abschnitt (19) größer ist als jeweils eine Distanz des nahen Abschnitts ($d_{proximal}$) entlang des Oberflächenprofil-Querschnitts (14a, 14b) in dem nahen Abschnitt (17) und eine Distanz des fernen Abschnitts ($d_{distal}$) entlang des Oberflächenprofil-Querschnitts (14a, 14b) in dem fernen Abschnitt (18).

5. Bremsscheibe (10) nach einem der vorhergehenden Ansprüche, **dadurch gekennzeichnet, dass** die Vorsprungsdistanz ($h_a(r)$, $h_b(r)$) als eine Funktion radialer Distanz (r) von der Drehachse (11) mehrere lokale Extrema aufweist.

6. Bremsklotz (20a, 20b) zur Verwendung zusammen mit der Bremsscheibe (10) nach einem der vorhergehenden Ansprüche, **dadurch gekennzeichnet, dass** der Bremsklotz (20a, 20b) derart strukturiert ist, dass er an die mindestens eine strukturierte Bremsoberfläche (15a, 15b) der Bremsscheibe (10) nach einem der vorhergehenden Ansprüche angepasst ist.

7. Bremsklotz (20a, 20b) nach Anspruch 6, **dadurch gekennzeichnet, dass** der Bremsklotz (20a, 20b) ein Reibungselement (22a, 22b) und eine strukturierte Beschichtung (36a, 36b) auf dem Reibungselement (22a, 22b) umfasst.

8. Bremsklotz (20a, 20b) nach Anspruch 6 oder 7, **dadurch gekennzeichnet, dass** der Bremsklotz (20a, 20b) ein Reibungselement (22a, 22b) und eine Ankerplatte (23a, 23b) umfasst, die eine im Allgemeinen ebene Montageseite (26a, 26b) zum Anbringen des Bremsklotzes (20a, 20b) an einer Bremsenbetätigungsanordnung (21) und eine Reibungselementseite (27a, 27b) aufweist, an der das Reibungselement (22a, 22b) befestigt ist, wobei die Reibungselementseite (27a, 27b) der Ankerplatte (22a, 22b) derart strukturiert ist, dass sie im Wesentlichen einem Bremsoberflächenprofil (25a, 25b) des Bremsklotzes (20a, 20b) folgt.

9. Bremssystem (1) für ein Fahrzeug, **gekennzeichnet durch** die Bremsscheibe (10) nach einem der Ansprüche 1 bis 5 und den Bremsklotz (20a, 20b) nach einem der Ansprüche 6 bis 8.

10. Fahrzeug, **gekennzeichnet durch** das Bremssystem (1) nach Anspruch 9.

## Revendications

1. Disque de frein (10) destiné à être disposé dans un véhicule de manière à tourner autour d'un axe de rotation (11) dudit disque de frein (10) lorsque ledit véhicule se déplace, et à permettre la réduction d'une vitesse dudit véhicule en comprimant des première (20a) et seconde (20b) plaquettes de frein contre ledit disque de frein (10), ce qui entraîne une interaction de friction entre les première (25a) et seconde (25b) surfaces de plaquettes de freins et des première (15a) et seconde (15b) surfaces de freinage annulaires correspondantes sur des faces opposées dudit disque de frein (10), chacune desdites première (15a) et seconde (15b) surfaces de freinage annulaires s'étendant radialement entre un rayon de surface de freinage interne ($R_1$) et un rayon de surface de freinage externe ($R_0$) dudit disque de frein (10) par rapport audit axe de rotation (11), chacune desdites première (15a) et seconde (15b) surfaces de freinage comportant une section proximale annulaire (17), une section distale annulaire (18) plus éloignée dudit axe de rotation (11) que ladite section proximale (17), et une section centrale annulaire (19) entre ladite section proximale annulaire (17) et ladite section distale (18), lesdites section proximale (17), section distale (18), et section centrale (19) ayant des largeurs égales ($r_p$), au moins une desdites première (15a) et seconde (15b) surfaces de freinage étant structurée de manière à saillir d'un plan de base (16a, 16b) perpendiculaire audit axe de rotation (11) pour présenter une section transversale de profil de surface (14a, 14b) avec un plan (24) incluant ledit axe de rotation (11), une distance de saillie ($h_a(r),h_b(r)$) le long d'une normale par rapport audit plan de base (16a, 16b) depuis ledit plan de base (16a, 16b) jusqu'à ladite section transversale de profil de surface (14a, 14b) variant avec la distance radiale (r) par rapport audit axe de rotation (11) de manière à ce qu'une distance de saillie moyenne de section centrale dans ladite section centrale (19) soit inférieure à une distance de saillie moyenne proximale dans ladite section proximale (17) et une distance de saillie moyenne distale dans ladite section distale (18), et ladite distance de saillie ($h_a(r),h_b(r)$) présentant, en fonction de la distance radiale (r) par rapport audit axe de rotation (11), une distance de saillie minimale ($h_{a,min}$, $h_{b,min}$) à une position radiale de saillie minimale ($R_{min}$) dans ladite section centrale (19), ladite distance de saillie ($h_a(r),h_b(r)$) augmentant au fur et à mesure de l'augmentation de la distance radiale par rapport à la position radiale de saillie minimale ($R_{min}$) partout dans ladite section centrale (19), **caractérisé en ce que** ladite distance de saillie ($h_a(r),h_b(r)$) varie entre ladite distance de saillie minimale ($h_{a,min}$, $h_{b,min}$) et une distance de saillie maximale ($h_{a,max}$, $h_{b,max}$), une distance entre ladite distance de saillie minimale ($h_{a,min}$, $h_{b,min}$) et ladite distance de saillie maximale ($h_{a,max}$, $h_{b,max}$) représentant moins de 20 % d'une distance minimale entre lesdites première (15a) et seconde (15b) surfaces de freinage annulaires.

2. Disque de frein (10) selon la revendication 1, **caractérisé en ce que** ladite distance de saillie ($h_a(r),h_b(r)$) varie en continu avec la distance radiale (r) par rapport audit axe de rotation (11).

3. Disque de frein (10) selon l'une quelconque des revendications précédentes, **caractérisé en ce que** ladite distance de saillie ($h_a(r),h_b(r)$) varie entre une distance de saillie minimale ($h_{a,min}$, $h_{b,min}$) et une distance de saillie maximale ($h_{a,max}$, $h_{b,max}$), la différence entre ladite distance de saillie minimale ($h_{a,min}$, $h_{b,min}$) et ladite distance de saillie maximale ($h_{a,max}$, $h_{b,max}$) étant inférieure à 5 mm.

4. Disque de frein (10) selon l'une quelconque des revendications précédentes, **caractérisé en ce qu'**une distance de section centrale ($d_{central}$) le long de ladite section transversale de profil de surface (14a, 14b) dans ladite section centrale (19) est plus longue que chacune d'une distance de section proximale ($d_{proximal}$) le long de ladite section transversale de profil de surface (14a, 14b) dans ladite section proximale (17) et d'une distance de section distale ($d_{distal}$) le long de ladite section transversale de profil de surface (14a, 14b) dans ladite section distale (18).

5. Disque de frein (10) selon l'une quelconque des revendications précédentes, **caractérisé en ce que** ladite distance de saillie ($h_a(r),h_b(r)$) fonction d'une distance radiale (r) par rapport audit axe de rotation (11) présente une pluralité d'extrêmes locaux.

6. Plaquette de frein (20a, 20b) destinée à une utilisation avec le disque de frein (10) selon l'une quelconque des revendications précédentes, **caractérisée en ce que** ladite plaquette de frein (20a, 20b) est structurée de manière à se conformer à l'au moins une surface de freinage structurée (15a, 15b) du disque de frein (10) selon l'une quelconque des revendications précédentes.

7. Plaquette de frein (20a, 20b) selon la revendication 6, **caractérisée en ce que** ladite plaquette de frein (20a, 20b) comprend un élément à friction (22a, 22b) et un revêtement structuré (36a, 36b) sur ledit élément à friction (22a, 22b).

8. Plaquette de frein (20a, 20b) selon la revendication 6 ou 7, **caractérisée en ce que** ladite plaquette de frein (20a, 20b) comprend un élément à friction (22a, 22b) et une plaque arrière (23a, 23b) comportant une face de montage globalement planaire (26a, 26b) pour la fixation de ladite plaquette de frein (20a, 20b) à un système d'actionnement de frein (21), et une face élément à friction (27a, 27b) à laquelle ledit élément à friction (22a, 22b) est fixé, la face élément à friction (27a, 27b) de ladite plaque arrière (22a, 22b) étant structurée de manière à suivre substantiellement un profil de surface de freinage (25a, 25b) de ladite plaquette de frein (20a, 20b).

9. Système de freinage (1) pour véhicule, **caractérisé par** le disque de frein (10) selon l'une quelconque des revendications 1 à 5 et la plaquette de frein (20a, 20b) selon l'une quelconque des revendications 6 à 8.

10. Véhicule, **caractérisé par** le système de freinage (1) selon la revendication 9.

*Fig. 1a*

Fig. 1b

Fig. 1c

Temperature
(°C)
650
0

Fig. 2a

Fig. 2b

Fig. 3a

Fig. 3b

Fig. 3c

EP 3 445 990 B1

Fig. 4a

Fig. 4b

Fig. 4c

Damage

>0.15
0.14
0.12
0.11
0.09
0.08
0.06
0.05
0.03
0.02
<0.00

*Fig. 5a*

Damage

>0.18
0.16
0.14
0.13
0.11
0.09
0.07
0.05
0.04
0.02
<0.00

*Fig. 5b*

Damage

>0.15
0.14
0.12
0.11
0.09
0.08
0.06
0.05
0.03
0.02
<0.00

*Fig. 5c*

EP 3 445 990 B1

**EP 3 445 990 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3750788 A
- JP S6099337 U
- JP H01124433 B

**Non-patent literature cited in the description**

- **ASIM RASHID.** Simulation of Thermal Stresses in a Brake Disc. *Licentiate Thesis No. 1603, LIU-TEK-LIC,* 2013, 37